# EUROPÄISCHE PATENTANMELDUNG

(11) **EP 0 786 775 A1**
(43) Veröffentlichungstag der Anmeldung: **30.07.1997**
(21) Anmeldenummer: 96118117.9
(22) Anmeldetag: 11.11.1996
(51) Int. Cl.: G11B 33/04

(54) **Vorrichtung zum Archivieren von Standard-Kassetten für Compact-Discs**

(30) Priorität: 26.01.1996 CH 212/96
(71) Anmelder: Spichtig AG, Kunststoffwerk, Steinen, CH-6422 Steinen (CH)
(72) Erfinder: Kunz, Peter, 8400 Winterthur (CH)
(74) Vertreter: Hug Interlizenz AG

(57) **Zusammenfassung**

Standard-Kassetten (1) für Compact-Discs sind an ihren Längsseiten mit Öffnungen versehen. Die Erfindung nutzt diese Öffnungen zum Befestigen von Haken oder eines mit Haken (11) versehenen Bügels (12), vermittels welcher die Kassetten in ein Hängeregister (21) eingehängt werden können.

## Beschreibung

### TECHNISCHES GEBIET

Die vorliegende Erfindung betrifft eine Vorrichtung zum Archivieren von Standard-Kassetten für Compact-Discs (CDs), welche an ihren Längsseiten mit Öffnungen versehen sind.

Compact-Discs werden neben ihrem ursprünglichen Verwendungszweck als Tonträger zunehmend als Datenträger im Computerbereich eingesetzt. Daraus ergeben neuartige Anforderungen an die Archivierungsmöglichkeiten derartiger Kassetten vor allem im Bürobereich.

### STAND DER TECHNIK

Vorrichtungen zum Archivieren oder eher zum gut zugänglichen Aufbewahren von CD-Kassetten sind in vielfältiger Ausführung bekannt. Zumeist handelt es sich hierbei um Gestelle, wie z.B. CD-Ständer, oder Boxen. Aus der DE-C2-4327203 ist eine Vorrichtung zum Archivieren von CD-Kassetten bekannt, bei welcher winkelförmige Kassettenträger an einer Profilschiene längsverschiebbar sowie gegenüber dieser verschwenkbar befestigt sind. Die Profilschiene ist insbesondere zur Wandmontage vorgesehen. Aus der US-A-5135105 ist eine spezielle, etwa rund ausgebildete CD-Kassette bekannt, welche mit einem Haken versehen werden kann, um die Kassette an einer Haltestange aufzuhängen. Schliesslich sind noch spezielle, aus einem dünnen Kunststoffmaterial tiefgezogene Haltelemente für CDs bekannt, auf welche die CDs einseitig aufgeschnappt werden und welche mit Haken zum Einordnen in einen Karteikasten oder dergleichen versehen sind. Die CDs liegen hierbei einseitig frei. Es besteht auch keine Möglichkeit, das sich auf den Inhalt der CD beziehende, in Standard-Kassetten regelmässig eingelegte bedruckte Deckblatt zu verwenden und zu befestigen.

### DARSTELLUNG DER ERFINDUNG

Die Erfindung, wie sie in den Patentansprüchen gekennzeichnet ist, löst die Aufgabe, eine Vorrichtung zum Archivieren von Standard-Kassetten für Compact-Discs (CDs) anzugeben, welche von der Ausbildung der Standard-Kassetten geschickt Gebrauch macht, kostengünstig herstellbar und durch den Benutzer einfach zu handhaben ist und vor allem auch im Bürobereich problemlos technisch sowie optisch zu integrieren ist.

Die Erfindung ist demnach gekennzeichnet durch in den Öffnungen befestigbare Haken zum Einhängen der Standard-Kassetten in ein Hängeregister.

Vorzugsweise sind die Haken an einem u-förmigen Bügel beidseitig angeformt, welcher die Kassetten umgreift und einen elastisch biegsamen Verbindungssteg aufweist.

Weiter vorzugsweise sind an den Seitenschenkeln des u-förmigen Bügels innenseitig a die genannten Öffnungen in den Kasetten angepasste Einrastnasen angeformt.

Sowohl die Haken als auch die Bügel sind als Spritzteile aus Kunststoff einfach und kostengünstig in grosser Anzahl herstellbar.

Soweit die Breite der Standard-Kassetten mit der Breite existierender Hängeregistersysteme nicht übereinstimmt, können speziell angepasste Hängeregisterelemente bereitgestellt werden. In Ausziehschubladen heute üblicher Büroschreibtische passen problemlos mehrere Reihen von CDs nebeneinander.

Die im Zusammenhang mit dem Bügel vorgesehene Möglichkeit der Befestigung von Markierungs-Reitern, erlaubt das einfache und zielsichere Wiederfinden der CDs im Hängeregister auf gewohnte Weise.

### KURZE ERLÄUTERUNG DER FIGUREN

Die Erfindung soll nachfolgend anhand von Ausführungsbeispielen im Zusammenhang mit der Zeichnung näher erläutert werden. Es Zeigen jeweils in perspektivischer Darstellung:
- Fig. 1: eine erste Ausführungsform der Erfindung mit lediglich zwei Haken,
- Fig. 2: eine zweite Ausführungsform, bei welcher die Haken integraler Bestandteil eines Bügels sind, und
- Fig. 3: eine Kassette vermittels eines Bügels gemäss Fig. 2 eingehängt in ein Hängeregisterelement

### WEGE ZUR AUSFÜHRUNG DER ERFINDUNG1

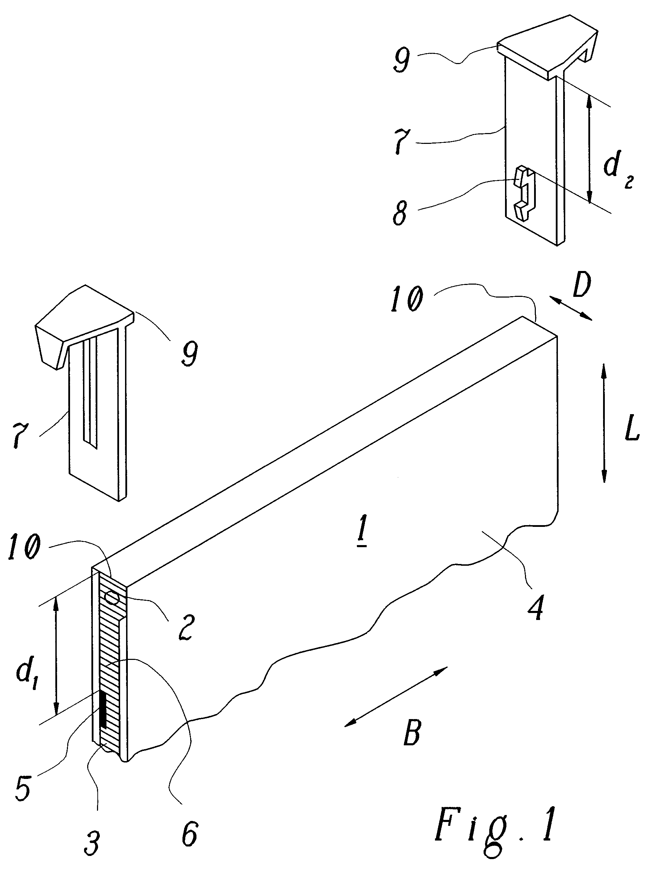

In Fig. 1 ist mit 1 eine Standard-Kassette für Compact Discs bezeichnet. Derartige Kassetten sind quaderförmig und weisen eine Breite B von 12,5 cm, eine Länge L von 14,2 cm und eine Dicke D von 1 cm auf. Bei 2 ist ein Scharnier vorhanden, so dass Deckel 3 und Bodenteil 4 der Kassette 1 zum Entnehmen oder Versorgen einer Compact-Disc auseinandergeklappt werden können. Mit 5 sind längliche Öffnungen in beiden Kassetten-Längsseiten 6 bezeichnet, welche vom dargestellten Scharnierende der Kassette 1 einen Abstand d1 von 2,9 mm aufweisen. Am entgegengesetzten, nicht dargestellten Öffnungsende sind zwei weitere solcher Öffnungen vorhanden, welche von diesem Ende jedoch nur einen Abstand von 1,9 mm aufweisen.

Im oberen Teil von Fig. 1 sind zwei Haken 7 dargestellt, welche mit angeformten Rastklammern 8 versehen sind. Mittels dieser Rastklammern 8 können die Haken 7 an der Kassette 1 befestigt werden, wobei die Rastklammern 8 in die Öffnungen 5 in den Kassetten-Längsseiten eingreifen und darin einrasten. Mit einem Steg 9 umgreifen die Haken 7 jeweils die obere Kassettenecke 10. Der Steg 9 weist deshalb von der Rastklammer 8 einen Abstand d2 auf, welcher dem erwähnten Abstand d1 entspricht.

Vermittels der beidseitig nach aussen ragenden Haken 7 kann die Kassette 1 in ein übliches Hängeregister mit zwei zueinander parallelen Schienen eingehängt und darin entlang der Schienen verschoben werden. Es versteht sich, dass die Schienen des Hängeregisters ein der Breite B der Kassette 1 entsprechenden Abstand aufweisen müssen.

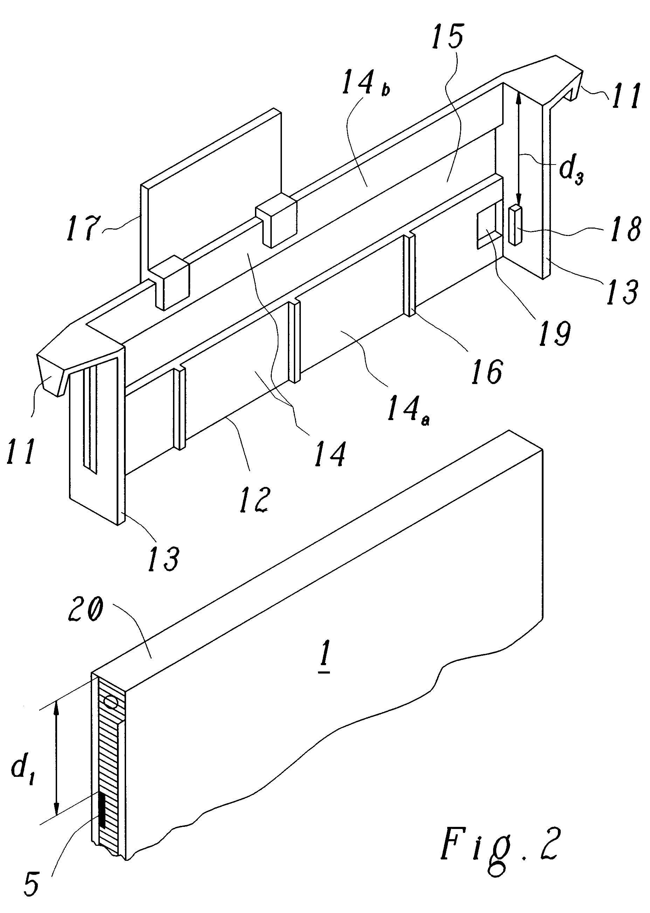

Bei der Ausführungsform von Fig. 2 sind ebenfalls zwei Haken 11 vorhanden, doch sind diese hier integraler Teil eines Bügels 12. Der Bügel 12 ist etwa u-förmig. Zwei Seitenschenkel 13 sind über einen elastisch biegsamen Verbindungssteg 14 verbunden. Dieser ist hier unterteilt in zwei voneinander beabstandete Stege 14a und 14b. Zwischen den Stegen 14a und 14b ergibt sich ein Fenster 15. Der untere Steg ist mit Abstandsrippen 16 versehen. Der obere Steg 14b bzw. zumindest seine obere Kante sind zum Aufstecken von Reitern 17 geeignet ausgebildet. Vorzugsweise sind Reiter 17 entlang des Steges 14b an verschiedener Stelle aufsteck- und dort auch fixierbar. Die Seitenteile 13 sind innenseitig mit Einrastnasen 18 versehen. Gegenüber den Einrastnasen 18 sind im unteren Verbindungssteg 14a Öffnungen 19 als Sichtfenster vorhanden.

Vermittels der Haken 11 kann der Bügel 12 auf die im unteren Teil von Fig. 2 wiederum teilweise dargestellte Kassette 1 aufgeschnappt werden. Der Bügel 12 umgreift dabei die Kassette 1 von hinten und die Einrastnasen 18 kommen in Eingriff mit den Öffnungen 5 der Kassette. Bedingt durch die Abstandsrippen 16 am unteren Verbindungssteg 14a weist der obere Verbindungssteg 14b den für das Aufstecken der Reiter 17 erforderlichen Abstand zu Kassette 1 auf.

Die Einrastnasen 18 sind gegenüber der Mitte der Seitenschenkel 13 zum Verbindungssteg 14 hin etwas versetzt angeordnet. Der Bügel 12 kann dadruch nur von einer Seite auf die Kassette 1 aufgeschnappt werden. Die Kassette 1 kann mit aufgeschnapptem Bügel geöffnet werden, sodass der Bügel ständig mit der Kassette verbunden bleiben kann.

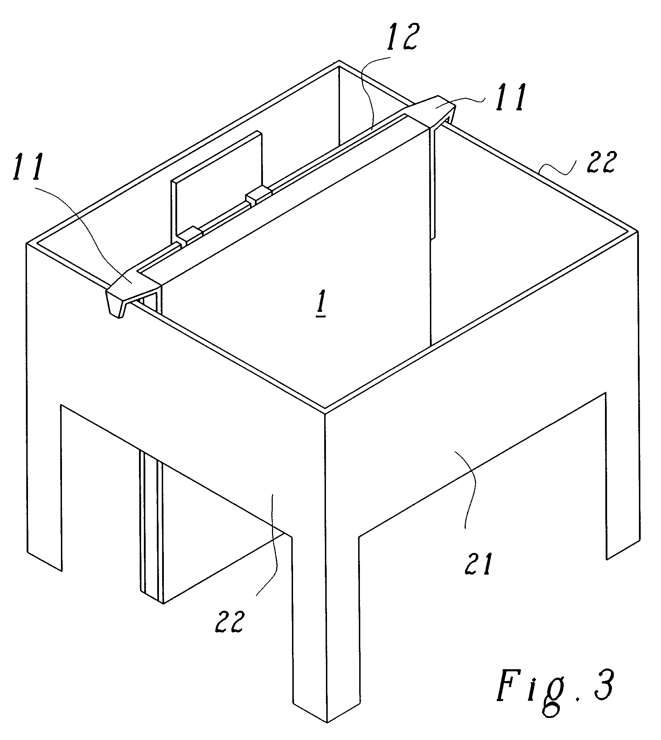

Der Abstand d3 der Einrastnasen 18 von den Haken 11 ist wieder entsprechend dem Abstand d1 der Öffnungen 5 von den Kassettenecken 10 gewählt. Bei aufgeschnapptem Bügel 12 schliessen dadurch die beiden Haken 11 etwa bündig mit der oberen Kassetten-Querseite 20 ab, wie dies Fig. 3 zeigt.

In Fig. 3 ist eine Kassette 1 vermittels eines Bügels 12 der Art von Fig. 2 in ein Hängeregisterelement 21 eingehängt. Der abstand der beiden Seitenteile 22 des Elements ist an die Breite B von der Kassette 1 speziell angepasst.

## Patentansprüche

1. Vorrichtung zum Archivieren von Standard-Kassetten (1) für Compact-Discs, welche an ihren Längsseiten (6) mit Öffnungen (5) versehen sind, gekennzeichnet durch in den Öffungen (5) befestigbare Haken (7;11) zum Einhängen der Standard-Kassetten (1) in ein Hängeregister (21).

2. Vorrichtung nach Anspruch 1, gekennzeichnet durch einen die Kassetten (1) umgreifenden, u-förmigen, mit einem elastisch biegsamen Verbindungssteg (14) versehenen, in den genannten Öffnungen (5) befestigbaren Bügel (12), an welchem die Haken (11) beidseitig angeformt sind.

3. Vorrichtung nach Anspruch 2, dadurch gekennzeichnet, dass an den Seitenschenkeln (13) des u-förmigen Bügels (12) innenseitig Einrastnasen (18) angeformt sind.

4. Vorrichtung nach Anspruch 3, dadurch gekennzeichnet, dass die Einrastnasen (18) gegenüber der Mitte der Seitenschenkel (13) zum Verbindungssteg (14) hin versetzt angeordnet sind.

5. Vorrichtung nach Anspruch 3 oder 4, dadurch gekennzeichnet, dass die Einrastnasen (18) von den beiden Haken (11) soweit entfernt angeordnet sind, dass die Haken (11), wenn die Einrastnasen (18) in die genannten Öffnungen eingerastet sind, mit einer Kassetten-Querseite (20) fluchten.

6. Vorrichtung nach einem der Ansprüche 3 bis 5, dadurch gekennzeichnet, dass im Verbindungssteg (14) im Bereich der Einrastnasen (18) erste Sichtfenster (19) vorhanden sind.

7. Vorrichtung nach einem der Ansprüche 2 bis 6, dadurch gekennzeichnet, dass der Verbindungssteg (14) ein vorzugsweise langgestecktes zweites Sichtfenster (15) aufweist oder in zwei voneinander beabstandete Verbindungsstege (14a,14b) unterteilt ist.

8. Vorrichtung nach einem der Ansprüche 2 bis 7, dadurch gekennzeichnet, dass der Verbindungssteg (14) des u-förmigen Bügels (12) zumindest über einen Teil (14a) seiner Breite innenseitig mit Abstandstegen (16) versehen ist.

9. Vorrichtung nach einem der Ansprüche 2 bis 8, dadurch gekennzeichnet, dass eine der Kanten des Verbindungsstegs (14) als Schiene (14b) zum Aufstecken von Reitern (17) ausgebildet ist.

10. Vorrichtung nach einem der Ansprüche 2 bis 9, gekennzeichnet, durch ein den Abmessungen von Standard-Kassetten (1) für Compact-Discs in der Breite angepasstes Hängeregisterelement (21).
